# EUROPÄISCHE PATENTSCHRIFT

(11) **EP 1 106 798 B1**
(45) Veröffentlichungstag und Bekanntmachung des Hinweises auf die Patenterteilung: **07.05.2003**
(21) Anmeldenummer: 00125381.4
(22) Anmeldetag: 01.12.2000
(51) Int. Cl.: F01N 3/08, F01N 3/20

(54) **Vorrichtung und Verfahren zur NOx- und/oder SOx-Regeneration eines NOx-Speicherkatalysators**
Apparatus and method for NOx- and/or SOx-regeneration of an NOx storage catalyst
Dispositif et procédé pour NOx- et/ou SOx régénération d'un catalyseur accumulateur de NOx

(30) Priorität: 10.12.1999 DE 19959605
(43) Veröffentlichungstag der Anmeldung: 13.06.2001
(73) Patentinhaber: Volkswagen Aktiengesellschaft, 38436 Wolfsburg (DE)
(72) Erfinder: Pott, Ekkehard, Dr., 38518 Gifhorn (DE)
(74) Vertreter: Meyer, Enno, Dr.

(56) Entgegenhaltungen:
- EP-A- 0 732 485
- EP-A- 0 822 323
- EP-A- 0 903 481
- GB-A- 2 303 565
- US-A- 5 956 942
- PATENT ABSTRACTS OF JAPAN vol. 017, no. 558 (M-1493), 7. Oktober 1993 (1993-10-07) & JP 05 156993 A (HINO MOTORS LTD), 22. Juni 1993 (1993-06-22)
- PATENT ABSTRACTS OF JAPAN vol. 1997, no. 06, 30. Juni 1997 (1997-06-30) & JP 09 032619 A (MITSUBISHI MOTORS CORP), 4. Februar 1997 (1997-02-04)

## Beschreibung

Die Erfindung betrifft eine Vorrichtung und ein Verfahren zur NO_{X}- und/oder SO_{X}-Regeneration eines NO_{X}-Speicherkatalysators, der in einer Abgasanlage eines Dieselmotors angeordnet ist, mit den in den Oberbegriffen der Ansprüche 1 und 10 genannten Merkmalen.

Es ist bekannt, ein während einer Verbrennung eines Luft-Kraftstoff-Gemisches entstehendes Abgas von Dieselmotoren zur Reinigung durch eine Abgasreinigungseinrichtung zu leiten. Eine solche Abgasreinigungseinrichtung umfaßt dabei üblicherweise Komponenten, wie Partikelfilter oder Katalysatoren, die eine Umsetzung von Schadstoffen am Abgas in weniger umweltrelevante Produkte ermöglichen. So können einerseits Reduktionsmittel, wie Kohlenmonoxid CO, unverbrannte Kohlenwasserstoffe HC oder Wasserstoff H₂, an Oxidationskatalysatoren unter magerer Atmosphäre, das heißt bei Sauerstoffüberschuß, weitestgehend oxidiert werden. Andererseits müssen während der Verbrennung entstehende Stickoxide NO_{X} durch die Reduktionsmittel an sogenannten Reduktionskatalysatoren umgesetzt werden. Da ein Betrieb von Dieselmotoren, insbesondere DI-Dieselmotoren, unter mageren Bedingungen bevorzugt ist, stehen für letztere Reaktion im allgemeinen nicht die erforderlichen Reduktionsmittelmassen zu Verfügung. Zur Abhilfe ist daher bekannt, sogenannte NO_{X}-Speicher in dem Abgaskanal anzuordnen, die in Phasen magerer Atmosphäre NO_{X} als Nitrat einspeichem und dieses in Phasen stöchiometrischer oder fetter Atmosphäre wieder desorbieren. Der NO_{X}-Speicher läßt sich mit den Reduktionskatalysatoren zusammenfassen als ein sogenannter NO_{X}-Speicherkatalysator, der dann das eingespeicherte Nitrat als Stickstoff N₂ freisetzt.

Da derartige NO_{X}-Speicherkatalysatoren naturgemäß nur über ein begrenztes Speichervolumen verfügen, muß in regelmäßigen Abständen eine Regeneration durch einen Wechsel in den stöchiometrischen oder fetten Betrieb durchgeführt werden. Beinhaltet der Kraftstoff schwefelhaltige Anteile, so kommt es während des Verbrennungsvorganges zusätzlich zur Bildung von Schwefeloxiden SOₓ, die als Sulfate ebenfalls in den NOₓ-Speicherkatalysator eingelagert werden. Zwar ist auch die SOₓ-Absorption reversibel, jedoch erfordert sie wesentlich höhere Temperaturen (beispielsweise bei auf Bariumoxid basierenden Speicherkatalysatoren Temperaturen von über 600 °C). Demnach sind zumeist zusätzliche Heizmaßnahmen zur SOₓ-Regeneration (Entschwefelung) notwendig.

Eine Erhöhung eines Reduktionsmittel-Massenstromes am Abgas kann in bekannter Weise, beispielsweise durch Androsselung, Ladedrucksenkung oder einer Anpassung einer EGR-Rate, erfolgen. Insbesondere bei Dieselmotoren ist allerdings aus Gründen des Fahrverhaltens ein rascher Wechsel zwischen verschiedenen Androsselungsstufen unerwünscht. Desweiteren erfolgt eine Änderung des Abgaslambdawertes mit vorgenannten Methoden zeitverzögert, das heißt, die Anpassung ist relativ träge und es kann unter Umständen zu einer Überregelung kommen.

JP-06117228 und US-A-5,956,942 beschreiben Maßnahmen für einen erhöhten Reduktionsmittel-Massenstrom im Abgas einer Diesel-Brennkraftmaschine mit einem NOx-Katalysator durch Nacheinspritzung von Kraftstoff in die Brennkraftmaschine. Nachteilig ist die Bildung geruchsintensiver Gase.

Der Erfindung liegt daher die Aufgabe zugrunde, ein Verfahren und eine Vorrichtung zu schaffen, mit denen es in einfacher Weise möglich ist, den Reduktionsmittel-Massenstrom zu erhöhen, ohne die vorgenannten Nachteile in Kauf nehmen zu müssen.

Diese Aufgabe wird durch die Merkmale des Verfahrens nach Anspruch 1 und der Vorrichtung nach Anspruch 10 gelöst. Bevorzugte Ausführungsformen der Erfindung sind Gegenstand der Unteransprüche.

Die Nacheinspritzung wird während der Regeneration alternierend aktiviert und deaktiviert. Das heißt, die Regeneration ist in aktive und inaktive Phasen unterteilt. Ein derartiger Mager-Fett-Zyklus unterdrückt die Bildung geruchsintensiven und daher unerwünschten Gasen, wie Schwefelwasserstoff H₂S und Ammoniak NH₃. Dabei hat es sich als besonders vorteilhaft erwiesen, eine Dauer der aktiven und/oder inaktiven Phasen in Abhängigkeit von einem Beladungsgrad mit Schwefel, einem aktuellen Lambdawert, einer Katalysatortemperatur oder einem Betriebszustand des Motors zu bestimmen. Weiterhin ist vorteilhaft, die aktiven und/oder inaktiven Phasen mit zunehmender Regenerationsdauer zu verkürzen. Insgesamt läßt sich durch die geschilderten Maßnahmen der Regenerationsablauf hinsichtlich der Bildung unerwünschter Nebenprodukte und der Regenerationsdauer optimieren.

Femer ist es vorteilhaft, die Einspritzmenge der aktiven Phasen in Abhängigkeit vom Beladungsgrad, dem aktuellen Lambdawert, der Katalysatortemperatur oder dem Betriebszustand des Motors festzulegen. Auch hier hat es sich als vorteilhaft erwiesen, die Einspritzmenge während der aktiven Phase mit zunehmender Regenerationsdauer zu verkleinern. Über die Änderung der Einspritzmenge ist - wie bereits erläutert - eine sehr viel schnellere Lambdaregelung des Abgases realisierbar als durch die bei den herkömmlichen Verfahren bekannten Maßnahmen.

Weiterhin hat es sich als vorteilhaft erwiesen, mit Beginn der Regeneration zunächst den Lambdawert durch Androsselung und/oder Ladedrucksenkung und/oder Anpassung einer EGR-Rate auf einen vorgegeben, gerade noch mageren Ausgangswert, insbesondere im Bereich von λ = 1,001 bis 1,5 einzustellen und erst anschließend die Nacheinspritzung zu initiieren. Der Ausgangswert kann dabei wiederum in Abhängigkeit vom Beladungsgrad, dem aktuellen Lambdawert, der Katalysatortemperatur oder dem Betriebszustand des Motors ermittelt und innerhalb eines Regenationszyklus laufend neu bestimmt werden. Eine solche Vorgehensweise ist insbesondere deshalb vorteilhaft, da auf diese Weise die zur Regeneration notwendigen Temperaturen zumindest aufrechterhalten werden können. So weist das Abgas im stöchiometrischen beziehungsweise gerade noch mageren Bereich eine höhere Abgastemperatur auf als im mageren "Normalbetrieb" von Dieselmotoren. Die Ladedrucksenkung, die EGR-Ratenänderung und/oder die Androsselung kann dabei zusätzlich derart durchgeführt werden, daß diese Maßnahmen zu einer Erhöhung der Abgastemperatur führen und damit die Heizmaßnahme während der Regeneration aufrechterhalten werden kann.

Vorteilhafterweise wird zur Nacheinspritzung ein bereits vorhandenes Einspritzsystem des Dieselmotors genutzt. Dieses kann ebenfalls zur Kraftstoffeinspritzung in die Abgasanlage einsetzbar sein. Denkbar ist aber auch, ein zusätzliches Einspritzsystem für die Abgasanlage vorzusehen.

Vorteilhaft ist ferner, wenn die Vorrichtung ein Steuergerät umfaßt, in dem eine Prozedur zur Regelung der Regeneration hinterlegt ist. Das Steuergerät kann in einer bereits vorhandenen Motorsteuerung integriert sein oder aber auch als selbständige Regeleinheit realisiert werden.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine Prinzipdarstellung eines Dieselmotors mit einer Abgasanlage und
- Figur 2: einen Verlauf von Lambda während einer NO_{X}- und/oder SO_{X}- Regeneration eines NO_{X}-Speicherkatalysators der Abgasanlage.

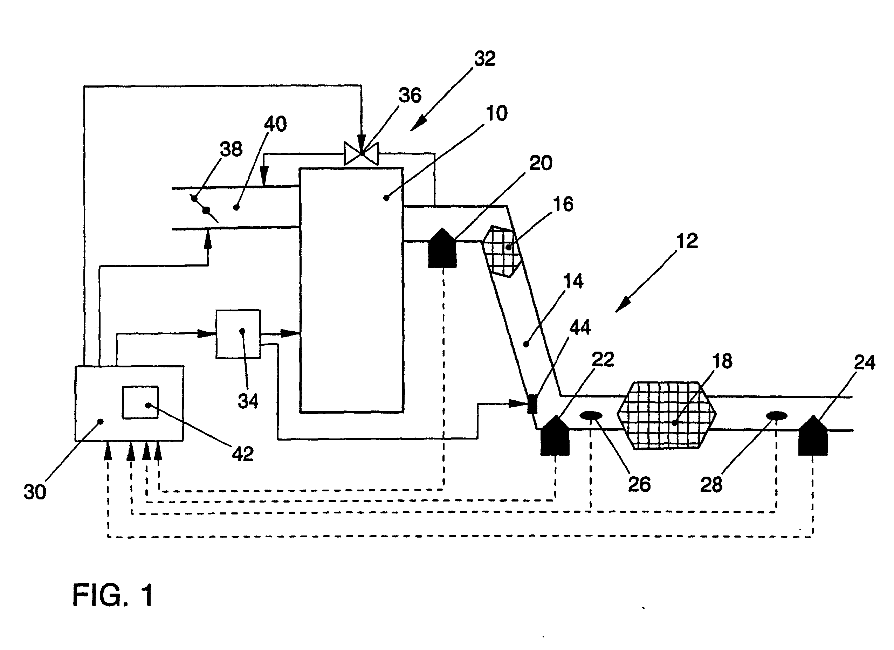

Die Figur 1 zeigt einen Dieselmotor 10, beispielsweise ein Dl- oder Turbo-Dieselmotor, mit einer Abgasanlage 12 in einem Abgaskanal 14. Die Abgasanlage 12 umfaßt einen Vorkatalysator 16 und einen NO_{X}-Speicherkatalysator 18, die zur Reinigung eines Abgases, das während einer Verbrennung eines Luft-Kraftstoff-Gemisches in dem Dieselmotor 10 entsteht, vorgesehen sind. Weiterhin können in dem Abgaskanal 14 Gassensoren 20, 22, 24 sowie Temperatursensoren 26, 28 vorgesehen sein, mit deren Hilfe Betriebsparameter des Abgases und/oder der Komponenten der Abgasanlage 12 in ein Motorsteuergerät 30 eingelesen werden können.

Weiterhin ist dem Dieselmotor 10 eine Abgasrückführeinrichtung 32 zugeordnet. Die Abgasrückführeinrichtung 32 besitzt als Stellglieder ein Abgasrückführventil 36 sowie eine Drosselklappe 38, die in einem Ansaugkanal 40 angeordnet ist. Über die Abgasrückführeinrichtung kann in bekannter Weise eine EGR-Rate (Abgasrückführrate) und/oder eine Androsselung eines angesaugten Luftstromes erfolgen.

Ferner ist dem Dieselmotor 10 ein Einspritzsystem 34 zugeordnet, das in bekannter Weise eine Regulierung einer Einspritzmenge, einer Einspritzzeit, eines Einspritzdruckes oder Zündwinkels erlaubt. Eine Kraftstoffeinspeisung durch das Einspritzsystem 34 kann direkt in den Dieselmotor 10 als auch im Bereich der Abgasanlage 12 erfolgen. Zur Kraftstoffeinspeisung in die Abgasanlage 12 kann beispielsweise eine Düse 44 vor dem NO_{X}-Speicherkatalysator 18 vorhanden sein, die über das Einspritzsystem 34 angesteuert wird. Denkbar ist auch, für letztere Kraftstoffeinspeisung ein separates zusätzliches Einspritzsystem vorzusehen.

Dem Einspritzsystem 34 werden während einer Regeneration des NOₓ-Speicherkatalysators 18 über ein Steuergerät 42 in noch näher zu erläuternder Weise Sollgrößen vorgegeben. Das Steuergerät 42 kann Teil des Motorsteuergerätes 30 sein und weist eine Prozedur zur Regelung einer Nacheinspritzung für die Regeneration des NO_{X}-Speicherkatalysators 18 auf.

In einem Normalbetrieb wird der Dieselmotor 10 unter stark magerer Atmosphäre betrieben. Zwar sind die Emissionen von Reduktionsmitteln, wie Kohlenmonoxid CO und unverbrannten Kohlenwasserstoffen HC, unter solchen Bedingungen sehr niedrig, gleichzeitig werden diese Komponenten jedoch auch zur Reduktion von während der Verbrennung entstehenden Stickoxiden NO_{X} benötigt. Um eine NO_{X}-Emission möglichst niedrig zu halten, wird daher das NO_{X} im Magerbetrieb im NO_{X}-Speicherkatalysator 18 absorbiert, und zwar solange, bis eine Speicherkapazität erschöpft ist oder eine NO_{X⁻} Desorptionstemperatur erreicht wird. Vor diesem Zeitpunkt muß demnach eine NO_{X⁻} Regeneration, das heißt ein Wechsel in stöchiometrische oder fette Atmosphäre, erfolgen.

Weiterhin bilden sich bei der Verbrennung schwefelhaltiger Kraftstoffe Schwefeloxide SO_{X}, die ebenfalls in dem NO_{X}-Speicherkatalysator 18 eingelagert werden. Zur Reversion sind allerdings wesentlich höhere Temperaturen als bei der NO_{X-} Regeneration notwendig, so daß häufig zusätzliche Heizmaßnahmen ergriffen werden müssen. Prinzipiell ist es jedoch auch bei einer SO_{X}-Regeneration notwendig, einen Reduktionsmittel-Massenstrom zu erhöhen.

Eine Regeneration (NO_{X}- und/oder SO_{X}-Regeneration) kann wie folgt durchgeführt werden:

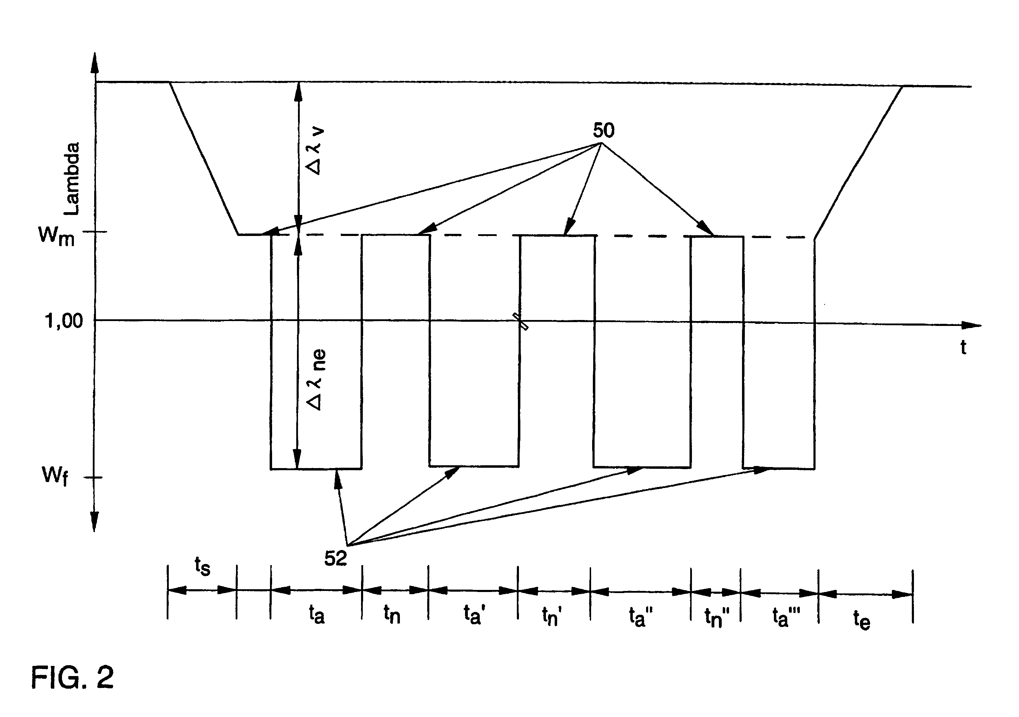

Mit vorliegender Regenerationsnotwendigkeit wird Lambda zunächst auf einen vorgegebenen, gerade noch mageren Ausgangswert Wₘ gesenkt. Dazu erfolgt in einer Startphase tₛ beispielsweise eine Androsselung und/oder Ladedrucksenkung eines Laders und/oder Anpassung einer EGR-Rate (siehe Figur 2). Diese Maßnahmen können gegebenenfalls noch in an sich bekannter Weise vor Erhöhung einer Abgastemperatur genutzt werden (Heizmaßnahme). Die Heizmaßnahme kann damit insbesondere während der SO_{X}-Regeneration aufrechterhalten werden.

Der Ausgangswert Wₘ kann in Abhängigkeit von einem Beladungsgrad des NO_{X-} Speicherkatalysators 18, dem aktuellen Lambdawert, einer Katalysatortemperatur oder einem Betriebszustand des Motors 10 festgelegt werden und gegebenenfalls während der Regeneration laufend neu bestimmt werden. Solange der Lambdawert auf dem Ausgangswert Wₘ verharrt, ist noch keine oder nur eine stark eingeschränkte Regeneration möglich.

Um eine Bildung von geruchsbelästigenden Produkten, wie H₂S und NH₃, zu unterdrücken, wird während der Regeneration alternierend zwischen mageren und fetten Bedingungen gewechselt. Damit ergeben sich inaktive Phasen 50, bei denen Lambda dem Ausgangswert Wₘ entspricht, und aktive Phasen 52, bei denen Lambda einen vorgegebenen Wert W_{f} einnimmt. Zunächst erfolgt demnach eine Lambdaabsenkung Δλ ᵥ in der Phase tₛ durch vorgenannte Maßnahmen auf den Ausgangswert Wₘ, und anschließend wird eine Lambdaabsenkung Δλₙₑ durch Nacheinspritzung mit dem Einspritzsystem 34 auf den Lambdawert W_{f} erzwungen.

Die Nacheinspritzung kann im Bereich des Dieselmotors 10 und/oder direkt in dem Abgaskanal 14 erfolgen. Eine Einspritzmenge der Nacheinspritzung kann in Abhängigkeit vom Beladungswert, dem aktuellen Lambdawert, der Katalysatortemperatur oder dem Betriebszustand des Motors 10 festgelegt werden und kann insbesondere mit zunehmender Regenerationsdauer verkleinert werden. Weiterhin kann in gleicher Weise eine Dauer tₐ beziehungsweise tₙ der aktiven und/oder inaktiven Phasen 50, 52 bestimmt werden. Auch hier kann mit zunehmender Regenerationsdauer eine Verkürzung der Phasen 50, 52 erfolgen.

Nachdem in bekannter Weise ein Regenerationsende detektiert wurde, werden die zur Einstellung des Ausgangswertes Wₘ eingeleiteten Maßnahmen wieder unterbunden, und es stellt sich in einer Phase tₑ wieder ein für den Normalbetrieb des Dieselmotors 10 vorgegebener magerer Lambdawert ein.

## Patentansprüche

1. Verfahren zur NOx- und/oder SOx-Regeneration eines NOx-Speicherkatalysators, der in einer Abgasanlage eines Dieselmotors angeordnet ist und der zur Regeneration mit einem erhöhten Reduktionsmittelmassenstrom an Abgas beaufschlagt wird, **dadurch gekennzeichnet, daß**
- die Erhöhung des Reduktionsmittelmassenstromes ganz oder in Teilen durch eine Nacheinspritzung von Kraftstoff in den Dieselmotor (10) und/oder in die Abgasanlage (12) erreicht wird, und
- die Nacheinspritzung während der NOx- und/oder SOx-Regeneration alternierend aktiviert und deaktiviert wird, wobei das Abgas in den aktiven Phasen (50) einen Lambdawert (W_{f}) < 1 und in den inaktiven Phasen (52) einen Lambdawert (Wₘ) > 1 aufweist.

2. Verfahren nach Anspruch 1, **dadurch gekennzeichnet, daß** der magere Lambdawert (Wₘ) durch Androsselung und/oder Ladedrucksenkung und/oder Anpassung einer EGR-Rate auf einen vorgegeben mageren Ausgangswert (Wₘ), insbesondere im Bereich von λ = 1,001 bis 1,5, eingestellt wird.

3. Verfahren nach Anspruch 1 oder 2, **dadurch gekennzeichnet, daß** mit Beginn der Regeneration zunächst in einer Startphase (ts) der Lambdawert auf den mageren Ausgangswert (Wₘ) abgesenkt wird und anschließend in den aktiven Phasen der Lambdawert von dem mageren Ausgangswert (Wₘ) durch eine nacheinspritzungsbedingte Lambdaabsenkung (Δλₙₑ) auf einen Lambdawert (W_{f}) < 1 abgesenkt wird.

4. Verfahren nach einem der vorangegangenen Ansprüche, **dadurch gekennzeichnet, daß** eine Dauer (ta, tn) der aktiven und/oder inaktiven Phasen (50, 52) in Abhängigkeit von einem Beladungsgrad mit Schwefel, einem aktuellen Lambdawert, einer Katalysatortemperatur oder einem Betriebszustand des Motors (10) bestimmt wird.

5. Verfahren nach einem der vorangegangenen Ansprüche, **dadurch gekennzeichnet, daß** eine Dauer (tₐ, tₙ) der aktiven und/oder inaktiven Phasen (50, 52) mit zunehmender Regenerationsdauer verkürzt werden.

6. Verfahren nach einem der vorhergehenden Ansprüche, **dadurch gekennzeichnet, daß** eine Einspritzmenge der Nacheinspritzung in Abhängigkeit vom Beladungsgrad mit Schwefel, dem aktuellen Lambdawert, der Katalysatortemperatur oder einem Betriebszustand des Motors (10) bestimmt wird.

7. Verfahren nach einem der vorhergehenden Ansprüche, **dadurch gekennzeichnet, daß** die Einspritzmenge mit zunehmender Regenerationsdauer verkleinert wird.

8. Verfahren nach einem der Ansprüche 2 bis 7, **dadurch gekennzeichnet, daß** der magere Ausgangswert (Wₘ) in Abhängigkeit vom Beladungsgrad mit Schwefel, dem aktuellen Lambdawert, der Katalysatortemperatur oder einem Betriebszustand des Motors (10) bestimmt wird.

9. Verfahren nach Anspruch 8, **dadurch gekennzeichnet, daß** der Ausgangswert (Wₘ) während der Regeneration laufend neu bestimmt wird.

10. Vorrichtung zur NOₓ- und/oder SOₓ-Regeneration eines NOₓ-Speicherkatalysators zur Durchführung des Verfahrens nach einem der vorangegangenen Ansprüche, mit einem NOx-Speicherkatalysator, der in einer Abgasanlage eines Dieselmotors angeordnet ist und der zur Regeneration mit einem erhöhten Reduktionsmittelmassenstrom an Abgas beaufschlagt wird, **dadurch gekennzeichnet, daß** Mittel vorgesehen sind, mit denen die alternierende Erhöhung des Reduktionsmittelmassenstroms ganz oder in Teilen durch eine Nacheinspritzung von Kraftstoff in den Dieselmotor (10) und/oder in die Abgasanlage (12) erreicht wird.

11. Vorrichtung nach Anspruch 10, **dadurch gekennzeichnet, daß** die Mittel ein Einspritzsystem (34) des Dieselmotors (10) umfassen.

12. Vorrichtung nach Anspruch 11, **dadurch gekennzeichnet, daß** das Einspritzsystem (34) zur Kraftstoffeinspritzung in die Abgasanlage (12) einsetzbar ist.

13. Vorrichtung nach einem der Ansprüche 10 bis 12, **dadurch gekennzeichnet, daß** die Mittel ein zusätzliches Einspritzsystem für die Abgasanlage (12) umfassen.

14. Vorrichtung nach einem der Ansprüche 10 bis 13, **dadurch gekennzeichnet, daß** die Mittel ein Steuergerät (42) umfassen, in dem eine Prozedur zur Regelung der Regeneration hinterlegt ist.

15. Vorrichtung nach Anspruch 14, **dadurch gekennzeichnet, daß** das Steuergerät (42) in ein Motorsteuergerät (30) integriert ist.

## Claims

1. Method for the NOx and/or SOx regeneration of an NOx storage catalytic converter which is arranged in an exhaust system of a diesel engine and which is acted on by an increased reducing-agent mass flow in the exhaust gas in order to be regenerated, **characterized in that**
- the increase in the reducing-agent mass flow is achieved completely or in part by an after-injection of fuel into the diesel engine (10) and/or into the exhaust system (12), and
- the after-injection is alternately activated and deactivated during the NOx and/or SOx regeneration, the exhaust gas having a lambda value (W_{f}) of < 1 in the active phases (50) and a lambda value (Wₘ) of > 1 in the inactive phases (52).

2. Method according to Claim 1, **characterized in that** the lean lambda value (Wₘ) is set by throttling and/or boost-pressure reduction and/or adapting an EGR rate to a predetermined lean starting value (Wₘ), in particular in the range from λ ≈ 1.001 to 1.5.

3. Method according to Claim 1 or 2, **characterized in that** when the regeneration begins, first of all, in a starting phase (ts), the lambda value is reduced to the lean starting value (Wₘ), and then, in the active phases, the lambda value is lowered from the lean starting value (Wₘ) to a lambda value (W_{f}) of < 1 by means of a lambda drop (Δλₙₑ) caused by the after-injection.

4. Method according to one of the preceding claims, **characterized in that** a duration (ta, tn) of the active and/or inactive phases (50, 52) is determined as a function of a degree of loading with sulphur, a current lambda value, a catalytic converter temperature or an operating state of the engine (10).

5. Method according to one of the preceding claims, **characterized in that** a duration (tₐ, tₙ) of the active and/or inactive phases (50, 52) is shortened as the regeneration time progresses.

6. Method according to one of the preceding claims, **characterized in that** an injection quantity of the after-injection is determined as a function of the degree of loading with sulphur, the current lambda value, the catalytic converter temperature or an operating state of the engine (10).

7. Method according to one of the preceding claims, **characterized in that** the injection quantity is reduced as the regeneration time progresses.

8. Method according to one of Claims 2 to 7, **characterized in that** the lean starting value (Wₘ) is determined as a function of the degree of loading with sulphur, the current lambda value, the catalytic converter temperature or an operating state of the engine (10).

9. Method according to Claim 8, **characterized in that** the starting value (Wₘ) is continually redetermined during the regeneration.

10. Device for the NOx and/or SOx regeneration of an NOx storage catalytic converter for carrying out the method according to one of the preceding claims, having an NOx storage catalytic converter, which is arranged in an exhaust system of a diesel engine and which is acted on by an increased reducing-agent mass flow in the exhaust gas in order to be regenerated, **characterized in that** there are means with which the alternating increase in the reducing-agent mass flow is achieved completely or in part by an after-injection of fuel into the diesel engine (10) and/or into the exhaust system (12).

11. Device according to Claim 10, **characterized in that** the means comprise an injection system (34) of the diesel engine (10).

12. Device according to Claim 11, **characterized in that** the injection system (34) can be used to inject fuel into the exhaust system (12).

13. Device according to one of Claims 10 to 12, **characterized in that** the means comprise an additional injection system for the exhaust system (12).

14. Device according to one of Claims 10 to 13, **characterized in that** the means comprise a control unit (42), in which a procedure for controlling the regeneration is stored.

15. Device according to Claim 14, **characterized in that** the control unit (42) is integrated in an engine control unit (30).

## Revendications

1. Procédé pour la régénération des NOx et/ou des SOx d'un catalyseur accumulateur de NOx, qui est disposé dans une colonne de gaz d'échappement d'un moteur diesel et qui est exposé en vue de la régénération à un courant massique accru d'agent réducteur des gaz d'échappement, **caractérisé en ce que**
- l'augmentation du courant massique d'agent réducteur est obtenue entièrement ou en partie par une surinjection de carburant dans le moteur diesel (10) et/ou dans la colonne de gaz d'échappement (12), et
- la surinjection est alternativement activée et désactivée pendant la régénération des NOx et/ou des SOx, les gaz d'échappement présentant pendant les phases actives (50) une valeur de lambda (W_{f}) < 1 et pendant les phases inactives (52) une valeur de lambda (Wₘ) > 1.

2. Procédé suivant la revendication 1, **caractérisé en ce que** la valeur pauvre de lambda (Wₘ) est réglée par étranglement et/ou par abaissement de la pression d'admission et/ou par adaptation d'un taux EGR à une valeur de sortie pauvre prédéterminée (Wₘ), en particulier dans le domaine de λ ≈ 1,001 à 1,5.

3. Procédé suivant la revendication 1 ou 2,
**caractérisé en ce qu'**au début de la régénération, la valeur de lambda est d'abord abaissée à la valeur initiale pauvre (Wₘ) au cours d'une phase de démarrage (ts) et ensuite, au cours des phases actives, la valeur de lambda est abaissée de la valeur initiale pauvre (Wₘ) à une valeur de lambda (W_{f}) < 1 par un abaissement de lambda dû à la surinjection (Δλₙₑ).

4. Procédé suivant l'une quelconque des revendications précédentes, **caractérisé en ce que** l'on détermine une durée (tₐ, tₙ) des phases actives et/ou inactives (50, 52) en fonction d'un degré de chargement en soufre, d'une valeur instantanée de lambda, d'une température du catalyseur ou d'un état de marche du moteur (10).

5. Procédé suivant l'une quelconque des revendications précédentes, **caractérisé en ce que** l'on diminue une durée (tₐ, tₙ) des phases actives et/ou inactives (50, 52) par une augmentation de la durée de régénération.

6. Procédé suivant l'une quelconque des revendications précédentes, **caractérisé en ce que** l'on détermine une quantité injectée par la surinjection en fonction du degré de chargement en soufre, de la valeur instantanée de lambda, de la température du catalyseur ou d'un état de marche du moteur (10).

7. Procédé suivant l'une quelconque des revendications précédentes, **caractérisé en ce que** l'on diminue la quantité injectée avec l'augmentation de la durée de régénération.

8. Procédé suivant l'une quelconque des revendications 2 à 7, **caractérisé en ce que** l'on détermine la valeur initiale pauvre (Wₘ) en fonction du degré de chargement en soufre, de la valeur instantanée de lambda, de la température du catalyseur ou d'un état de marche du moteur (10).

9. Procédé suivant la revendication 8, **caractérisé en ce que** l'on détermine à nouveau la valeur initiale (Wm) en continu pendant la régénération.

10. Dispositif pour la régénération des NOx et/ou des SOx d'un catalyseur accumulateur de NOx pour la mise en oeuvre du procédé suivant l'une quelconque des revendications précédentes, avec un catalyseur accumulateur de NOx, qui est disposé dans une colonne de gaz d'échappement d'un moteur diesel et qui est exposé en vue de la régénération à un courant massique accru d'agent réducteur des gaz d'échappement, **caractérisé en ce qu'**il est prévu des moyens avec lesquels on obtient l'augmentation alternée du courant massique d'agent réducteur entièrement ou en partie par une surinjection de carburant dans le moteur diesel (10) et/ou dans la colonne de gaz d'échappement (12).

11. Dispositif suivant la revendication 10, **caractérisé en ce que** les moyens comprennent un système d'injection (34) du moteur diesel (10).

12. Dispositif suivant la revendication 11, **caractérisé en ce que** le système d'injection (34) peut être utilisé pour l'injection de carburant dans la colonne de gaz d'échappement (12).

13. Dispositif suivant l'une quelconque des revendications 10 à 12, **caractérisé en ce que** les moyens comprennent un système d'injection supplémentaire pour la colonne de gaz d'échappement (12).

14. Dispositif suivant l'une quelconque des revendications 10 à 13, **caractérisé en ce que** les moyens comprennent un appareil de commande (42), dans lequel est mémorisée une procédure de régulation de la régénération.

15. Dispositif suivant la revendication 14, **caractérisé en ce que** l'appareil de commande (42) est intégré dans un appareil de commande du moteur (30).
